# EUROPEAN PATENT APPLICATION

(11) **EP 1 840 846 A2**
(43) Date of publication of application: **03.10.2007**
(21) Application number: 07103815.2
(22) Date of filing: 09.03.2007
(51) Int. Cl.: G07C 9/00

(54) **Access controlling method of non-contact communication electronic device, and non-contact communication electronic device**

(30) Priority: 29.03.2006 JP 2006090395
(71) Applicant: Oki Electric Industry Co., Ltd., Tokyo 105-8460 (JP)
(72) Inventor: Mitsui, Yasuhiro c/o Oki Electric Industry Co.Ltd, Tokyo 105-8460 (JP)
(74) Representative: Betten & Resch

(57) **Abstract**

There are provided an access controlling method of a non-contact communication electronic device and a non-contact communication electronic device thereof, which can prevent illegitimate access without the convenience of use and the handiness and the like for the user deteriorating. The method includes detecting inclination of a main body, and controlling an on/off state of a non-contact communication function of the main body. In a case in which it is detected that the main body is in a horizontal state or in a case in which it is detected that the main body is within a predetermined allowable range from a horizontal state in the inclination detecting, the non-contact communication function is turned on in the controlling.

## Description

### BACKGROUND OF THE INVENTION

### Field of the Invention

The present invention relates to, in an electronic device having a non-contact communication function, a method of controlling access which uses the non-contact communication function, and a non-contact communication electronic device thereof.

### Description of the Related Art

As a conventional technique which controls the command execution authorization of a non-contact IC card, there is "a non-contact IC card including command executing portions 121, 221 which execute a command which is an instruction to the IC card, a control switch 14 sensitive to operation of a user, command storing portions 180, 280 storing one or plural commands which become an object of control of whether or not it can be executed, and execution controlling portions 122, 222 which control whether or not the commands stored in the command storing portions 180, 280 can be executed, wherein the execution controlling portions 122, 222 control the command executing portion 121 to execute one or plural commands stored in the command storing portion 180 in accordance with operation of the control switch 14" (Japanese Patent Application Laid-Open (JP-A) No. 2003-150925).

Further, as a technique for protecting card information from illegitimate access at a non-contact IC card, there is "Accommodating a protective sheet (illegitimate access protecting device) 12, which has a conductive winding 121 wound in a spiral form within a plane and short-circuited between both end portions and a sheet material 122 which supports the conductive winding 121, in a holder main body so as to be disposed opposingly to an IC card C1. At this time, the winding 121 and an antenna portion of the IC card C1 are magnetically coupled, and the resonance frequency of the IC card C1 is varied, and the IC card C1 is set in a state in which communication is impossible. In this way, the card information is protected from illegitimate access to the IC card C1. Further, by providing, at the protective sheet 12, a switch 123 for canceling the short-circuited state between the both end portions of the winding 121, the communication function of the IC card C1 can be restored on the initiative of the owner of the card." (JP-A No. 2004-348500)

As illegitimate access preventing functions at a conventional non-contact communication electronic device, there are a function having a switch which controls the command execution authorization such as disclosed in JP-ANo. 2003-150925, or a function having a switch which can control the communication function such as disclosed in JP-A No. 2004-348500.

However, in order to put into effect these illegitimate access preventing functions, at the time when the user is using the non-contact communication electronic device, the user must carry out communication while physically operating the aforementioned switch. Therefore, there are the problems that the convenience of use for the user deteriorates, and further, due to the limits on operation such as described above, the handiness deteriorates.

Thus, an access controlling method of a non-contact communication electronic device and a non-contact communication electronic device thereof, which can prevent illegitimate access without the convenience of use and the handiness and the like for the user deteriorating, are desired.

### SUMMARY OF THE INVENTION

An access controlling method of a non-contact communication electronic device relating to the present invention includes: detecting an inclination of a main body; and controlling an on/off state of a non-contact communication function of the main body, wherein, in the controlling, in a case in which it is detected that the main body is in a horizontal state or in a case in which it is detected that the main body is within a predetermined allowable range from a horizontal state in the inclination detecting, the non-contact communication function is turned on.

Note that the non-contact communication electronic device in the present invention means an electronic device which carries out non-contact communication such as a non-contact IC card, a cell phone which incorporates a non-contact IC, or the like. This holds hereinafter as well.

Further, a non-contact communication electronic device relating to the present invention includes: a non-contact communication section that, in an on state, carries out non-contact communication with an exterior; an inclination detecting section detecting an inclination of a main body; and a control section controlling an on/off state of the non-contact communication section when the non-contact communication section receives a non-contact communication request, wherein, in a case in which the inclination detecting section detects that the main body is in a horizontal state or in a case in which the inclination detecting section detects that the main body is within a predetermined allowable range from a horizontal state, the control section turns the non-contact communication section on.

In accordance with the access controlling method of a non-contact communication electronic device relating to the present invention, the non-contact communication function is on/off controlled in accordance with the state of the non-contact communication electronic device main body. Therefore, illegitimate access to the non-contact communication electronic device can be prevented without the user carrying out a special switching operation or the like.

### BRIEF DESCRIPTION OF THE DRAWINGS

Preferred exemplary embodiments of the present invention will be described in detail based on the following figures, wherein:
Fig. 1 illustrates the structure of a non-contact communication electronic device relating to a first exemplary embodiment;
Fig. 2 explains the operational flow of a control section 102;
Fig. 3 shows an image of usage at the time when a non-contact communication electronic device 100 is used in a horizontal state;
Fig. 4 shows an image of usage at the time when the non-contact communication electronic device 100 is used in a vertical state;
Fig. 5 illustrates examples of the non-contact communication electronic device 100 being in a vertical state;
Fig. 6 illustrates the structure of a non-contact communication electronic device relating to a second exemplary embodiment;
Fig. 7 explains the operational flow of the control section 102;
Fig. 8 explains problems arising in a case in which an electronic device 110 which is a legitimate communication partner and an illegitimate reader 120 exist at physically close positions;
Fig. 9 shows examples of information stored in a storage section 107;
Fig. 10 illustrates the structure of a non-contact communication electronic device relating to a third exemplary embodiment;
Fig. 11 explains the operational flow of the control section 102;
Fig. 12 illustrates the structure of a non-contact communication electronic device relating to a fourth exemplary embodiment;
Fig. 13 explains the operational flow of the control section 102;
Fig. 14 illustrates the structure of a non-contact communication electronic device relating to a fifth exemplary embodiment;
Fig. 15 explains the operational flow of the control section 102;
Fig. 16 illustrates the structure of a non-contact communication electronic device relating to a sixth exemplary embodiment;
Fig. 17 explains the operational flow of the control section 102;
Fig. 18 explains directions of movement of the non-contact communication electronic device 100;
Fig. 19 explains forms of usage of a non-contact communication electronic device relating to a seventh exemplary embodiment; and
Fig. 20 explains the operational flow of the control section 102.

### DETAILED DESCRIPTION OF THE INVENTION

### [First Exemplary Embodiment]

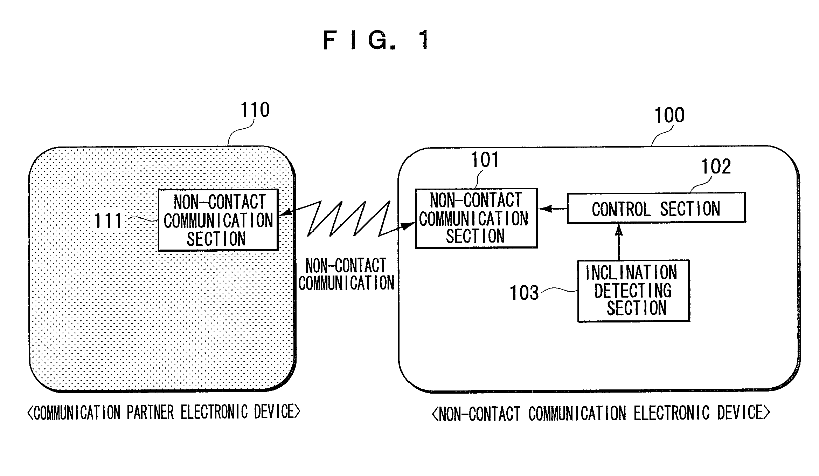

Fig. 1 illustrates the structure of a non-contact communication electronic device relating to a first exemplary embodiment of the present invention.

A non-contact communication electronic device 100 is the non-contact communication electronic device relating to the present first exemplary embodiment, and has a non-contact communication section 101, a control section 102, and an inclination detecting section 103.

An electronic device 110 which is a communication partner is a partner in communication by non-contact communication of the non-contact communication electronic device 100, and has a non-contact communication section 111.

The non-contact communication section 101 carries out non-contact communication with the non-contact communication section 111.

The control section 102 controls the on/off state of the non-contact communication function of the non-contact communication section 101.

The inclination detecting section 103 detects the inclination of the non-contact communication electronic device 100, and reports it to the control section 102.

Note that the non-contact communication electronic device 100 is, for example, a non-contact IC card, or a device such as a cell phone or the like which incorporates a non-contact IC. The electronic device 110 which is the communication partner is a device such as, for example, a non-contact IC card reader or the like provided at a store or the like.

Further, the inclination detecting section 103 can be realized by, for example, a gyro sensor, an acceleration sensor, a mercury switch, or the like.

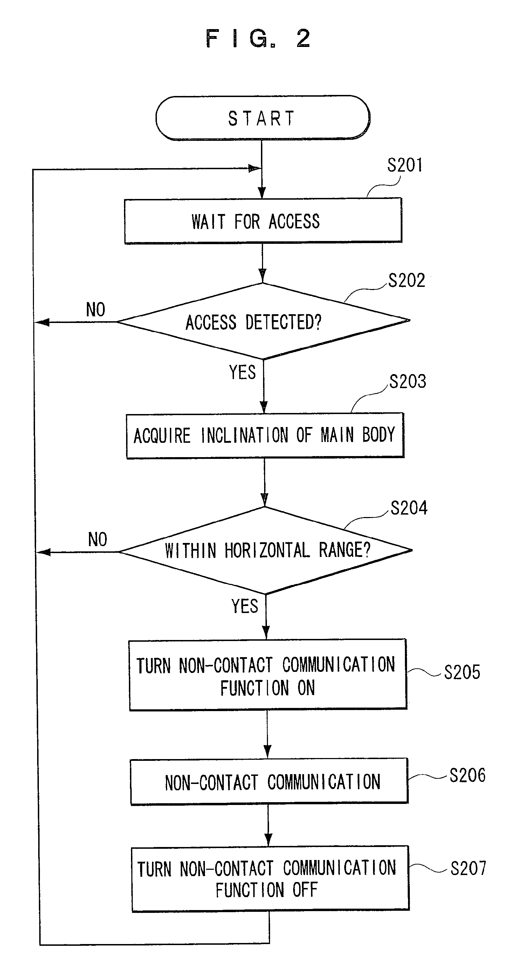

Fig. 2 explains the operational flow of the control section 102.
(S201)
   The control section 102 is in a state of standing-by until there is an access request by non-contact communication to the non-contact communication section 101.
(S202)
   The control section 102 judges whether or not it is detected, at the non-contact communication section 101, that there is an access request by non-contact communication. If there is no access request, the routine returns to step S201, whereas if there is an access request, the routine proceeds to step S203.
(S203)
   The control section 102 acquires the inclination of the non-contact communication electronic device 100 main body from the inclination detecting section 103.
(S204)
   The control section 102 judges whether or not the inclination of the non-contact communication electronic device 100 acquired in step S203 is a horizontal state or within a predetermined allowable range from a horizontal state. If the inclination is not within the predetermined range, the routine returns to step S201, whereas if the inclination is within the predetermined range, the routine moves on to step S205.
(S205)
   The control section 102 turns the non-contact function of the non-contact communication section 101 on.
(S206)
   The non-contact communication section 101 carries out non-contact communication with the non-contact communication section 111.
(S207)
   After the non-contact communication ends, the control section 102 turns the non-contact function of the non-contact communication section 101 off.

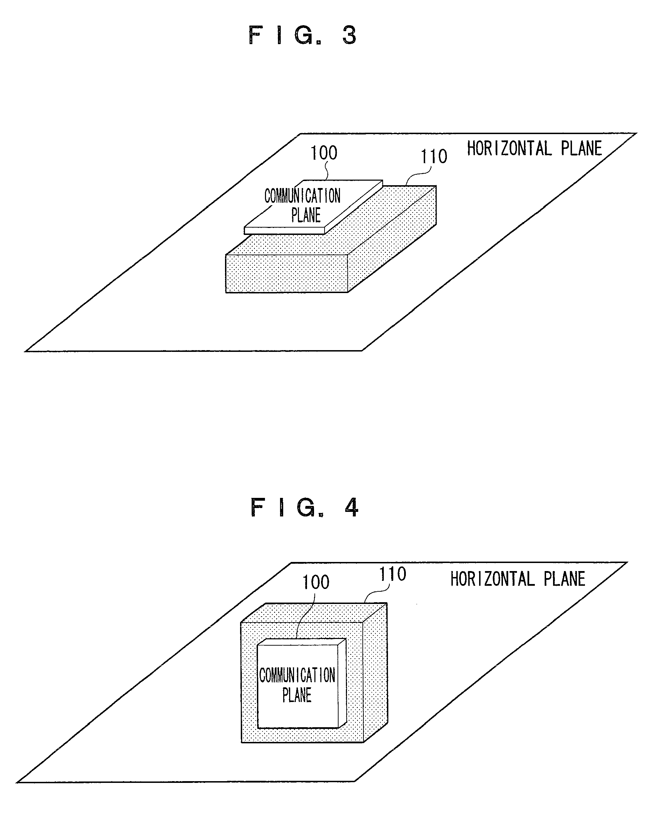

Fig. 3 shows an image of usage at the time when the non-contact communication electronic device 100 is used in a horizontal state.

Generally, there are many cases in which the electronic device 110, which is the communication partner disposed at a store or the like, is set so as to structure a communication plane in a horizontal state or in a state near horizontal. When supposing such a form of usage, an access controlling method which is based on the inclination of the non-contact communication electronic device 100 is an effective method.

Fig. 4 shows an image of usage at the time when the non-contact communication electronic device 100 is used in a vertical state. In accordance with the operational flow of Fig. 2, in a state such as shown in Fig. 4, the non-contact communication function of the non-contact communication electronic device 100 is off, and a third party cannot illegitimately access the non-contact communication electronic device 100.

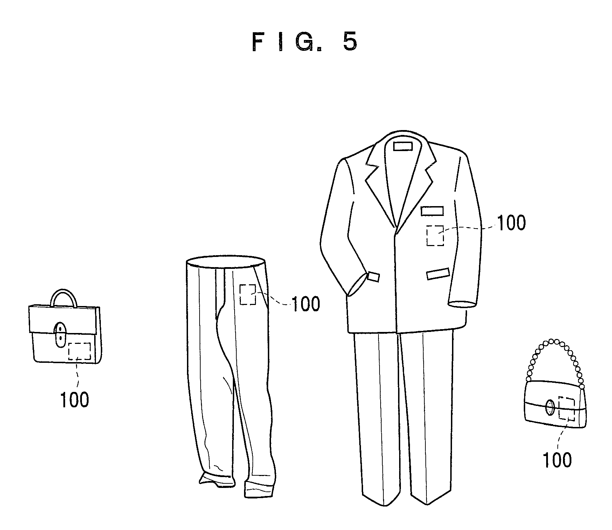

Examples in which there is access to the non-contact communication electronic device 100 in the state shown in Fig. 4 will be explained by using Fig. 5.

Fig. 5 illustrates examples of the non-contact communication electronic device 100 being in a vertical state.

There are many cases in which, when the user is not using the non-contact communication electronic device 100, the non-contact communication electronic device 100 is placed in a pocket or in a bag. In such cases, the non-contact communication electronic device 100 is in a state which is closer to a vertical state than a horizontal state.

It can be thought that, within a crowded train car for example, information of the non-contact communication electronic device 100 can be read by an illegitimate reader. If the non-contact communication electronic device 100 does not have some type of function for preventing such illegitimate access, illegitimate access to the non-contact communication electronic device 100 is allowed without the user even noticing it, which is not preferable.

Thus, it can be thought that the user does not intend to use the non-contact communication electronic device 100 when the non-contact communication electronic device 100 is in a state near vertical as shown in Fig. 5, and, by turning the non-contact communication function off, the illegitimate access such as described above can be prevented.

On the other hand, it can also be thought that the non-contact communication electronic device 100 is in a state near horizontal when at the bottom surface of a bag or the like.

However, if the non-contact communication electronic device 100 which is at the bottom surface is to be illegitimately accessed such as described above, such illegitimate access is accompanied by a suspicious action such as placing the illegitimate reader against the bottom surface of the bag, and therefore, it would be more difficult than carrying out illegitimate access in a vertical state.

Therefore, it can be thought that, by limiting non-contact communication in a vertical state, illegitimate access can be prevented in most cases.

As described above, in accordance with the non-contact communication electronic device relating to the present first exemplary embodiment, illegitimate access to the non-contact communication electronic device can be prevented without the user carrying out a special switching operation or the like.

### [Second Exemplary Embodiment]

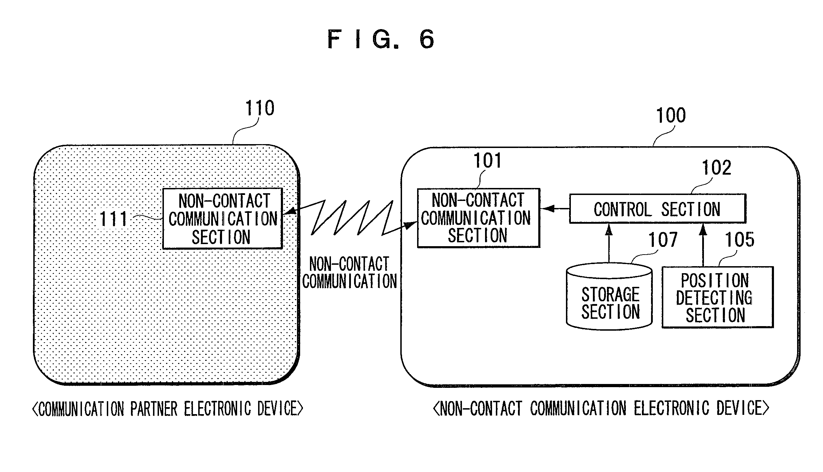

Fig. 6 illustrates the structure of a non-contact communication electronic device relating to a second exemplary embodiment of the present invention.

The non-contact communication electronic device 100 has a position detecting section 105 and a storage section 107.

The position detecting section 105 detects current position information of the non-contact communication electronic device 100.

The storage section 107 stores sets of information regarding devices which are valid as communication partners in non-contact communication with the main body, and position information of these valid devices.

Because other structures are similar to those of Fig. 1 in the first exemplary embodiment, description thereof is omitted.

Note that the position detecting section 105 can be a position information detecting section in accordance with GPS positioning for example. Further, at the point in time when the non-contact communication electronic device 100 is shipped out as a product or the like, sets of valid device information and position information thereof are stored in the storage section 107. The needed, optimal capacity thereof can be selected in accordance with the allowable size, weight, and the like of the non-contact communication electronic device 100.

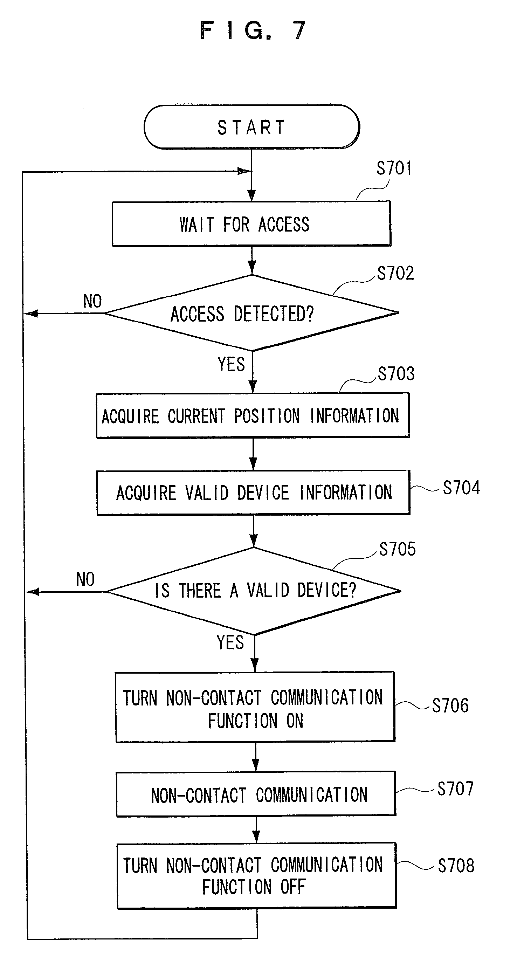

Fig. 7 explains the operational flow of the control section 102.
(S701)
   The control section 102 is in a state of standing-by until there is an access request by non-contact communication to the non-contact communication section 101.
(S702)
   The control section 102 judges whether or not it is detected, at the non-contact communication section 101, that there is an access request by non-contact communication. If there is no access request, the routine returns to step S701, whereas if there is an access request, the routine proceeds to step S703.
(S703)
   The control section 102 acquires the current position information of the non-contact communication electronic device 100 which is detected by the position detecting section 105.
(S704)
   The control section 102 acquires, from the storage section 107, the sets of the information regarding devices which are valid as communication partners in non-contact communication with the main body, and position information of these valid devices.
(S705)
   On the basis of the current position information of the non-contact communication electronic device 100 acquired from the position detecting section 105 and the information acquired from the storage section 107, the control section 102 judges whether or not there exists, at the current position of the non-contact communication electronic device 100, a device which is valid as a communication partner of non-contact communication.
   If it is judged that there is no valid device, the routine returns to step S701, whereas if it is judged that there is a valid device, the routine proceeds to step S706.
(S706)
   The control section 102 turns the non-contact function of the non-contact communication section 101 on.
(S707)
   The non-contact communication section 101 carries out non-contact communication with the non-contact communication section 111.
(S708)
   After the non-contact communication ends, the control section 102 turns the non-contact function of the non-contact communication section 101 off.

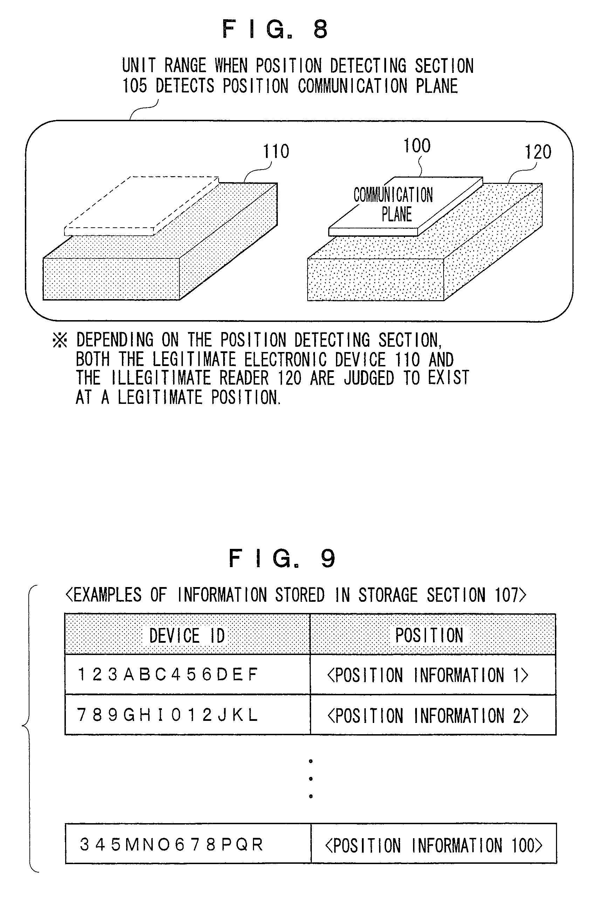

Fig. 8 explains problems arising in a case in which the electronic device 110 which is a legitimate communication partner and an illegitimate reader 120 exist at physically close positions.

Generally, there are limits on the accuracy of the current position detection of the position detecting section 105, and detection of the position of the object is carried out by using a width of a given range as a unit of position detection.

Accordingly, a range which is less than the accuracy of detection by the position detecting section 105 is treated as the same position. Therefore, when carrying out illegitimate access prevention while depending only on position information, in a state in which the electronic device 110 which is a legitimate communication partner and the illegitimate reader 120 exist at physically close positions, the illegitimate reader 120 also exists at the same position as the legitimate device, and therefore, there is the concern that the illegitimate reader 120 will be mistakenly identified as a legitimate device.

Fig. 9 shows examples of information stored in the storage section 107.

In order to avoid problems such as that described above, it suffices to be able to distinguish between devices which are legitimate communication partners and illegitimate devices.

Accordingly, as shown in Fig. 9 for example, ID numbers which singularly identify the legitimate communication partner devices and information regarding the positions of these devices are stored in the storage section 107. At the time of carrying out non-contact communication, the device ID of the communication partner is confirmed. By effecting control such that the non-contact communication function is not turned on unless the confirmed device ID matches a set of a legitimate device ID and position information, problems such as that described above can be avoided.

As described above, in accordance with the non-contact communication electronic device relating to the present second exemplary embodiment, communication partner devices can be limited on the basis of the position of the main body, and illegitimate access can be prevented, for example, at places where service for non-contact communication devices is not provided.

### [Third Exemplary Embodiment]

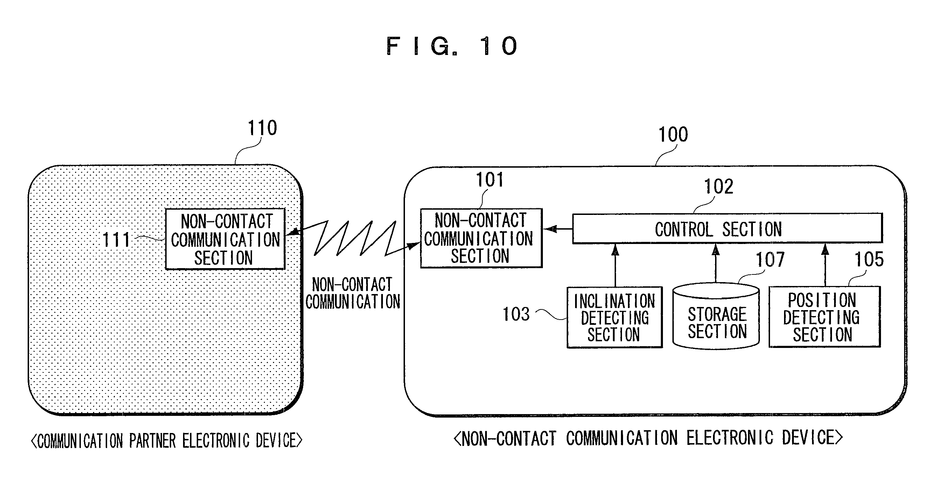

Fig. 10 illustrates the structure of a non-contact communication electronic device relating to a third exemplary embodiment of the present invention.

The non-contact communication electronic device 100 has the inclination detecting section 103, the position detecting section 105, and the storage section 107.

The storage section 107 stores sets of information regarding devices which are valid as communication partners in non-contact communication with the main body, and position information of these valid devices, and in addition, stores information regarding the inclinations of the communication planes of these devices.

Because the respective functions of the inclination detecting section 103 and the position detecting section 105 and other structures are similar to those described in the first exemplary embodiment and the second exemplary embodiment, description thereof is omitted.

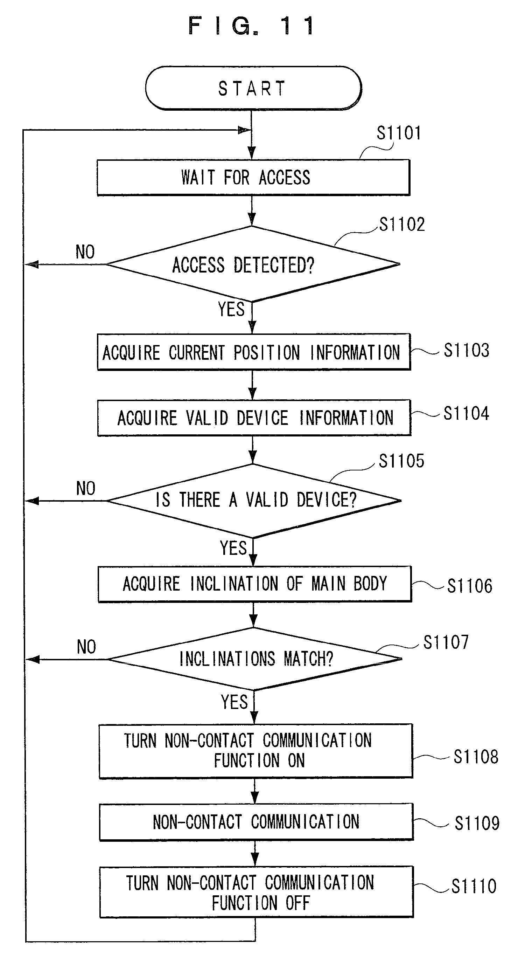

Fig. 11 explains the operational flow of the control section 102.
(S1101)
   The control section 102 is in a state of standing-by until there is an access request by non-contact communication to the non-contact communication section 101.
(S 1102)
   The control section 102 judges whether or not it is detected, at the non-contact communication section 101, that there is an access request by non-contact communication. If there is no access request, the routine returns to step S1101, whereas if there is an access request, the routine proceeds to step S1103.
(S1103)
   The control section 102 acquires the current position information of the non-contact communication electronic device 100 which is detected by the position detecting section 105.
(S 1104)
   The control section 102 acquires, from the storage section 107, the sets of the information regarding devices which are valid as communication partners in non-contact communication with the main body and position information of these valid devices, as well as information regarding the inclinations of the communication planes of these devices.
(S1105)
   On the basis of the current position information of the non-contact communication electronic device 100 acquired from the position detecting section 105 and the information acquired from the storage section 107, the control section 102 judges whether or not there exists, at the current position of the non-contact communication electronic device 100, a device which is valid as a communication partner of non-contact communication.
   If it is judged that there is no valid device, the routine returns to step S1101, whereas if it is judged that there is a valid device, the routine proceeds to step S 1106.
(S 1106)
   The control section 102 acquires the inclination of the non-contact communication electronic device 100 main body from the inclination detecting section 103.
(S1107)
   The control section 102 judges whether or not the inclination of the non-contact communication electronic device 100 main body which was acquired in step S1106, and the inclination of the communication plane of the valid device at the current position of the main body which was acquired from the storage section 107, match one another. If they do not match, the routine returns to step S1101, whereas if they do match or are within a predetermined range, the routine proceeds to step S1108.
(S1108)
   The control section 102 turns the non-contact function of the non-contact communication section 101 on.
(S1109)
   The non-contact communication section 101 carries out non-contact communication with the non-contact communication section 111.
(S1110)
   After the non-contact communication ends, the control section 102 turns the non-contact function of the non-contact communication section 101 off.
   As described above, in accordance with the non-contact communication electronic device relating to the present third exemplary embodiment, in addition to position information of the communication partner device, information relating to the inclination of the communication plane also can be utilized. Therefore, illegitimate access can be dealt with even if the communication partner device is not a communication partner device at which the inclination of the communication plane is horizontal.

### [Fourth Exemplary Embodiment]

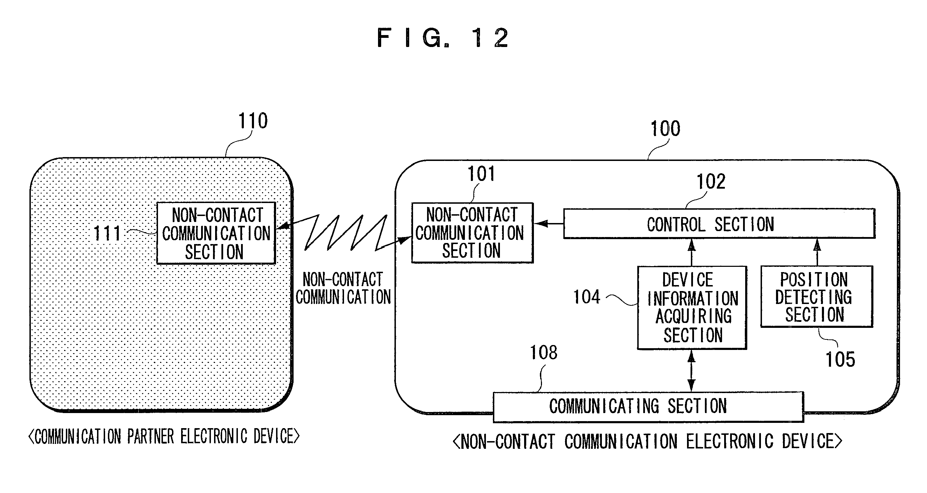

Fig. 12 illustrates the structure of a non-contact communication electronic device relating to a fourth exemplary embodiment of the present invention.

The non-contact communication electronic device 100 has a device information acquiring section 104, the position detecting section 105, and a communication section 108.

The device information acquiring section 104 acquires, via the communication section 108 and from a communication network (not shown), sets of information regarding devices which are valid as communication partners in non-contact communication with the main body, and position information of these valid devices.

The position detecting section 105 detects current position information of the non-contact communication electronic device 100.

The communication section 108 carries out communication between the non-contact communication electronic device 100 and a communication network (not shown).

Because the other structures are similar to Fig. 1 in the first exemplary embodiment, description thereof is omitted.

Note that a predetermined server and the device information acquiring section 104 may be structured such that, at the time when the device information acquiring section 104 acquires, from a communication network and via the communication section 108, sets of information regarding devices which are valid as communication partners in non-contact communication with the main body and position information of these valid devices, information which is the object of acquisition is stored in the server for example, and the information which is the object of acquisition is downloaded from the server.

Further, in order to prevent illegitimate access to the server, if, for example, a unique identifier of the non-contact communication electronic device is transmitted simultaneously with the information acquisition request and all access from devices having identifiers other than those imagined is prohibited, safety can be aimed for.

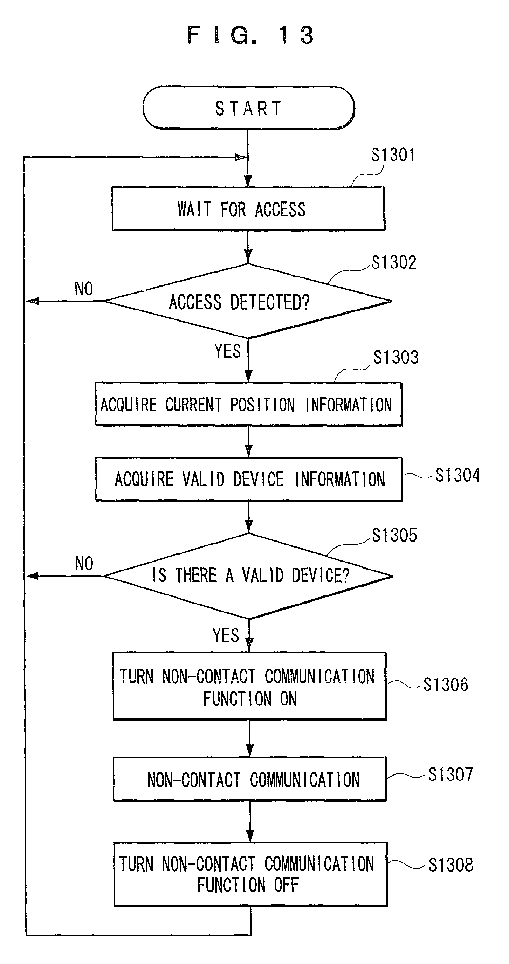

Fig. 13 explains the operational flow of the control section 102.
(S1301)
   The control section 102 is in a state of standing-by until there is an access request by non-contact communication to the non-contact communication section 101.
(S1302)
   The control section 102 judges whether or not it is detected, at the non-contact communication section 101, that there is an access request by non-contact communication. If there is no access request, the routine returns to step S 13 0 1, whereas if there is an access request, the routine proceeds to step S1303.
(S1303)
   The control section 102 acquires the current position information of the non-contact communication electronic device 100 which is detected by the position detecting section 105.
(S 1304)
   The device information acquiring section 104 acquires, via the communication section 108, the sets of the information regarding devices which are valid as communication partners in non-contact communication with the main body and position information of these valid devices.
   The control section 102 acquires the information which the device information acquiring section 104 acquired via the communication section 108.
(S1305)
   On the basis of the current position information of the non-contact communication electronic device 100 acquired from the position detecting section 105 and the information acquired from the device information acquiring section 104, the control section 102 judges whether or not there exists, at the current position of the non-contact communication electronic device 100, a device which is valid as a communication partner of non-contact communication.
   If it is judged that there is no valid device, the routine returns to step S1301, whereas if it is judged that there is a valid device, the routine proceeds to step S 1306.
(S 1306)
   The control section 102 turns the non-contact function of the non-contact communication section 101 on.
(S1307)
   The non-contact communication section 101 carries out non-contact communication with the non-contact communication section 111.
(S1308)
   After the non-contact communication ends, the control section 102 turns the non-contact function of the non-contact communication section 101 off.

Note that the communication section 108 and the storage section 107 described in the third exemplary embodiment may be used together, and usually, information relating to legitimate communication partner devices is acquired from the storage section 107, and each predetermined interval, the latest information is acquired via the communication section 108 and the information of the storage section 107 is updated.

As described above, in accordance with the non-contact communication electronic device relating to the present fourth exemplary embodiment, information of devices which are legitimate communication partners can be acquired via a communication network without incorporating a large-capacity storage device into the main body. In this way, communication partner devices can be limited on the basis of the position of the main body, and illegitimate access can be prevented, for example, at places where service for non-contact communication devices is not provided.

### [Fifth Exemplary Embodiment]

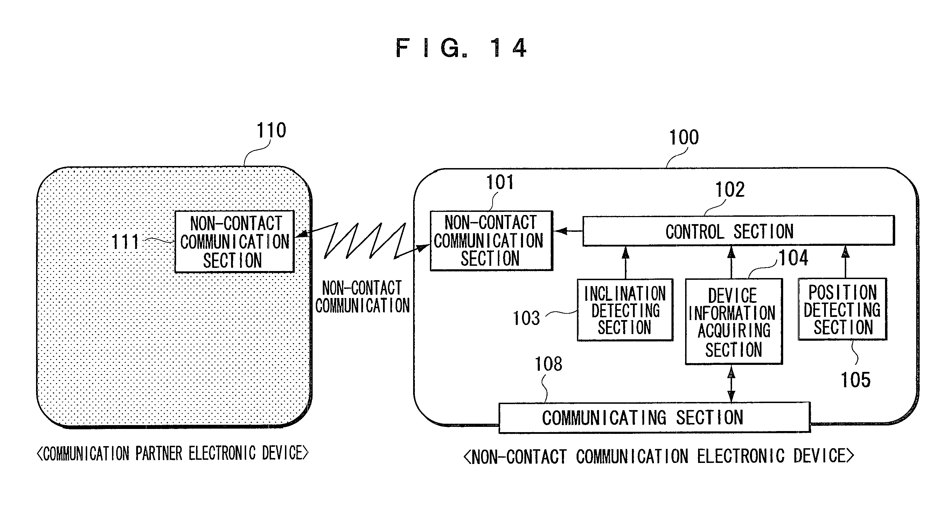

Fig. 14 illustrates the structure of a non-contact communication electronic device relating to a fifth exemplary embodiment of the present invention.

The non-contact communication electronic device 100 has the inclination detecting section 103, the device information acquiring section 104, the position detecting section 105, and the communication section 108.

The device information acquiring section 104 acquires, from a communication network (not shown) and via the communication section 108, sets of information regarding devices which are valid as communication partners in non-contact communication with the main body and position information of these valid devices, as well as acquires information relating to the inclinations of the communication planes of these devices.

The communication section 108 carries out communication between the non-contact communication electronic device 100 and a communication network (not shown).

Because the respective functions of the inclination detecting section 103 and the position detecting section 105 and the other structures are similar to those described in the first exemplary embodiment and the second exemplary embodiment, description thereof is omitted.

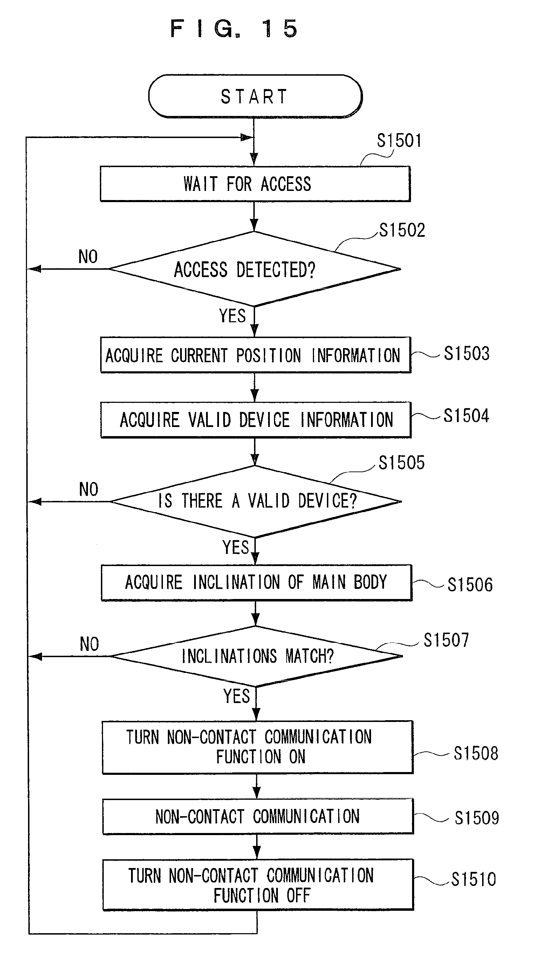

Fig. 15 explains the operational flow of the control section 102.
(S1501)
   The control section 102 is in a state of standing-by until there is an access request by non-contact communication to the non-contact communication section 101.
(S1502)
   The control section 102 judges whether or not it is detected, at the non-contact communication section 101, that there is an access request by non-contact communication. If there is no access request, the routine returns to step S1501, whereas if there is an access request, the routine proceeds to step S1503.
(S1503)
   The control section 102 acquires the current position information of the non-contact communication electronic device 100 which is detected by the position detecting section 105.
(S1504)
   The device information acquiring section 104 acquires, via the communication section 108, the sets of the information regarding devices which are valid as communication partners in non-contact communication with the main body and position information of these valid devices, as well as acquires information relating to the inclinations of the communication planes of these devices.
   The control section 102 acquires the information which the device information acquiring section 104 acquired via the communication section 108.
(S1505)
   On the basis of the current position information of the non-contact communication electronic device 100 acquired from the position detecting section 105 and the information acquired from the device information acquiring section 104, the control section 102 judges whether or not there exists, at the current position of the non-contact communication electronic device 100, a device which is valid as a communication partner of non-contact communication.
   If it is judged that there is no valid device, the routine returns to step S1501, whereas if it is judged that there is a valid device, the routine proceeds to step S 1506.
(S1506)
   The control section 102 acquires the inclination of the non-contact communication electronic device 100 main body from the inclination detecting section 103.
(S1507)
   The control section 102 judges whether or not the inclination of the non-contact communication electronic device 100 main body acquired in step S1506, and the inclination of the communication plane of the valid device at the current position of the main body which was acquired from the device information acquiring section 104, match one another. If they do not match, the routine returns to step S1501, whereas if they do match or are within a predetermined range, the routine proceeds to step S1508.
(S1508)
   The control section 102 turns the non-contact function of the non-contact communication section 101 on.
(S1509)
   The non-contact communication section 101 carries out non-contact communication with the non-contact communication section 111.
(S1510)
   After the non-contact communication ends, the control section 102 turns the non-contact function of the non-contact communication section 101 off.

As described above, in accordance with the non-contact communication electronic device relating to the present fifth exemplary embodiment, information of devices which are legitimate communication partners and information relating to the inclinations of the communication planes of these devices can be acquired via a communication network without incorporating a large-capacity storage device into the main body. In this way, in addition to the position information of the communication partner device, information relating to the inclination of the communication plane also can be used. Therefore, illegitimate access can be dealt with even if the communication partner device is not a communication partner device at which the inclination of the communication plane is horizontal.

### [Sixth Exemplary Embodiment]

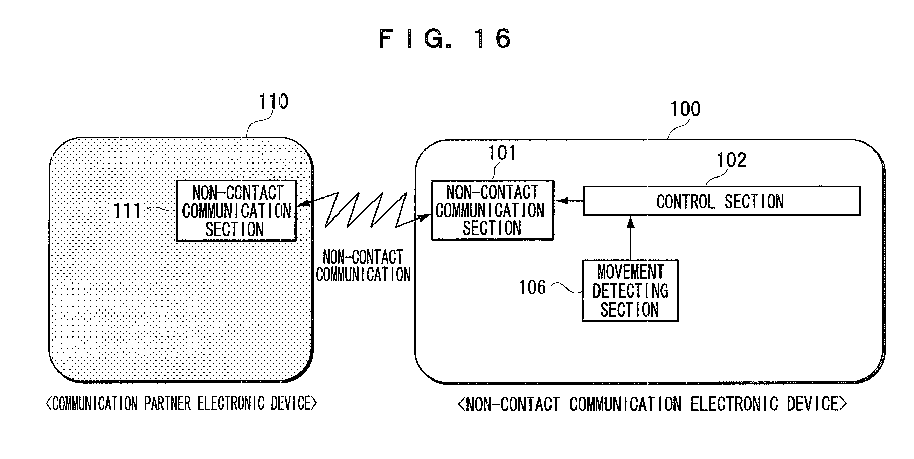

Fig. 16 illustrates the structure of a non-contact communication electronic device relating to a sixth exemplary embodiment of the present invention.

The non-contact communication electronic device 100 has a movement detecting section 106.

The movement detecting section 106 detects the movement of the non-contact communication electronic device 100, and reports it to the control section 102.

Because the other structures are similar to those of Fig. 1 in the first exemplary embodiment, description thereof is omitted.

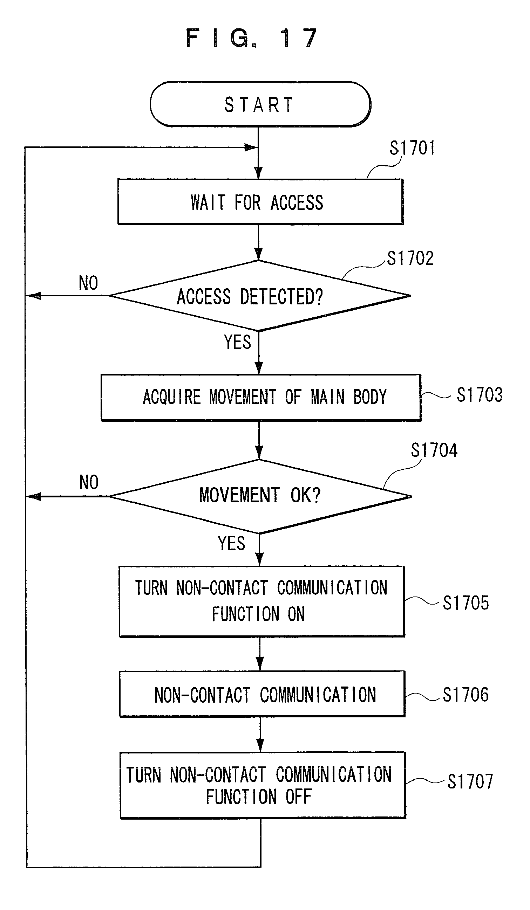

Fig. 17 explains the operational flow of the control section 102.
(S1701)
   The control section 102 is in a state of standing-by until there is an access request by non-contact communication to the non-contact communication section 101.
(S1702)
   The control section 102 judges whether or not it is detected, at the non-contact communication section 101, that there is an access request by non-contact communication. If there is no access request, the routine returns to step S 1701, whereas if there is an access request, the routine proceeds to step S 1703.
(S1703)
   The control section 102 acquires the movement of the non-contact communication electronic device 100 main body from the movement detecting section 106.
(S 1704)
   The control section 102 judges whether or not the movement of the non-contact communication electronic device 100 main body acquired in step S 1703 is movement of a predetermined extent or greater, and whether or not this movement is a predetermined direction. If the movement is not movement of a predetermined extent or greater, or if the movement is not movement of a predetermined direction, the routine returns to step S 170 1, whereas if the movement is a predetermined movement, the routine proceeds to step S1705.
(S1705)
   The control section 102 turns the non-contact function of the non-contact communication section 101 on.
(S 1706)
   The non-contact communication section 101 carries out non-contact communication with the non-contact communication section 111.
(S 1707)
   After the non-contact communication ends, the control section 102 turns the non-contact function of the non-contact communication section 101 1 off.

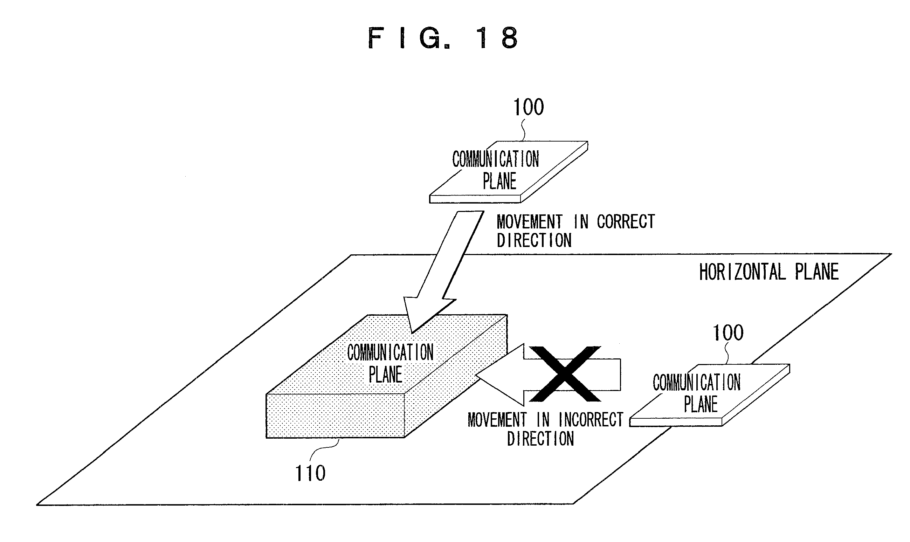

Fig. 18 explains directions of movement of the non-contact communication electronic device 100.

The device which is the communication partner is assumed to be a device which the non-contact communication electronic device 100 accesses in a predetermined direction, and is thought to structure a communication plane. Therefore, even if movements other than the movement along this direction are considered to be illegitimate access, it is thought that few problems arise in practical use.

If it is judged in normal usage that the movement is movement of an illegitimate direction, communication may be tried again. Because the time required for non-contact communication is extremely short, the convenience of use for the user does not deteriorate greatly.

As described above, in accordance with the non-contact communication electronic device relating to the present sixth exemplary embodiment, cases other than cases in which the user intentionally moves the non-contact communication electronic device 100 in a predetermined direction can be judged to be illegitimate access.

### [Seventh Exemplary Embodiment]

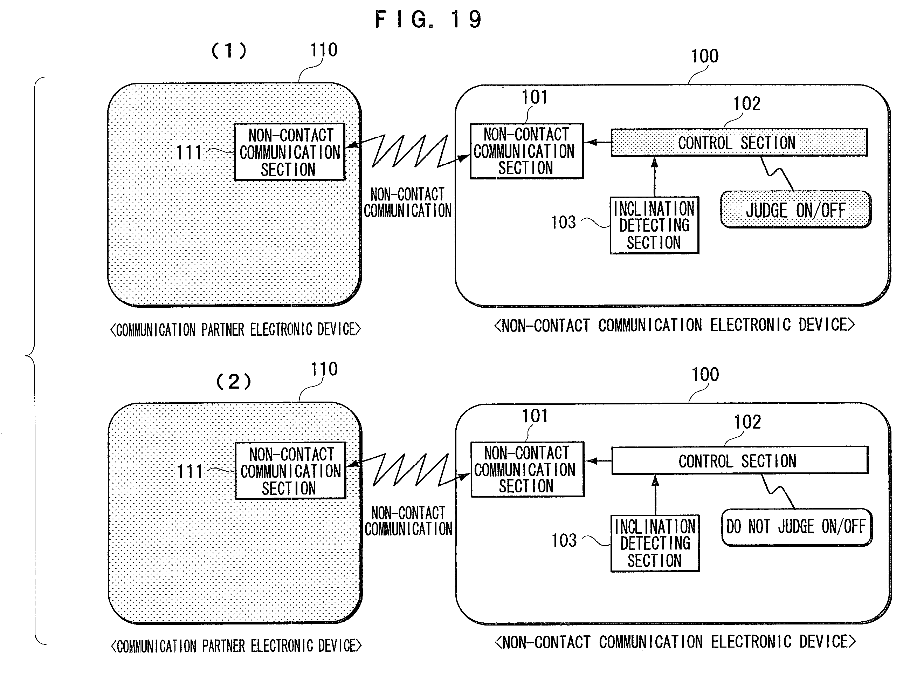

Fig. 19 explains forms of usage of a non-contact communication electronic device relating to a seventh exemplary embodiment of the present invention.

Because the structure of the non-contact communication electronic device 100 is similar to that of Fig. 1 in the first exemplary embodiment, description thereof is omitted.

Various types of information, such as information relating to electronic money, information relating to shopping points, and the like, can be thought of as the information which the non-contact communication electronic device 100 exchanges in non-contact communication.

If information which identifies the type of information is added to the information which is exchanged in the non-contact communication, the extent of communication control can be changed in accordance with the degree of importance of the information.

For example, a non-contact credit card can be thought to be an object for which the demand for protection with respect to illegitimate access is strong, from the standpoint of protecting personal information. Accordingly, when carrying out a credit settlement, it is desirable to place limits on the non-contact communication function.

On the other hand, cases in which that same non-contact credit card also functions as a point card can be thought of. It can be thought that there are more places where the card is used as a point card than used as a credit card, and that there are many places where readers are disposed, and that not necessarily all of the readers can grasp correct position information.

In such cases, not placing limits on the non-contact communication function when the card is used as a point card can be thought to increase the handiness for both the user and the service provider.

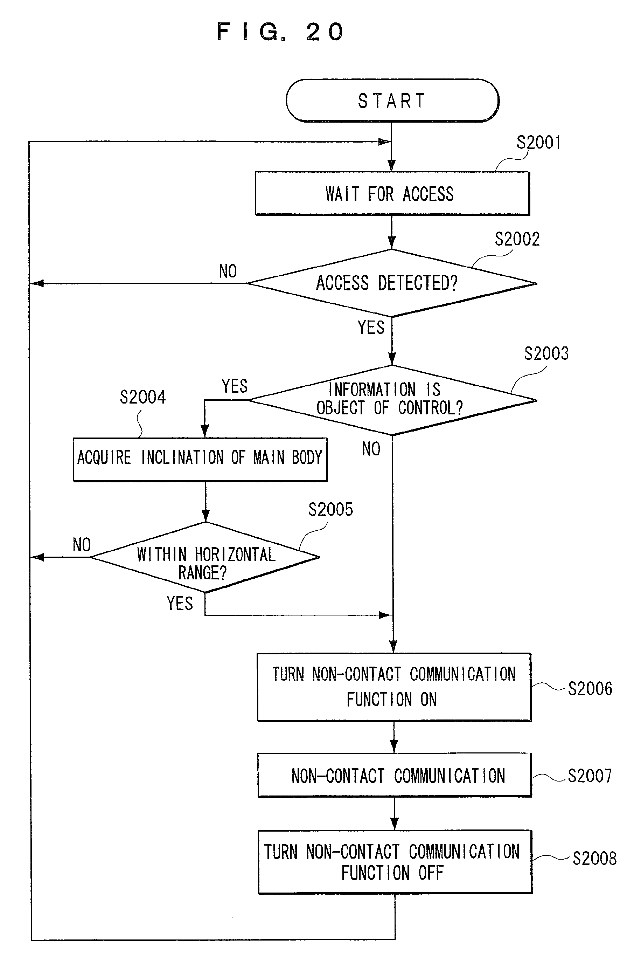

Fig. 20 explains the operational flow of the control section 102.
(S2001)
   The control section 102 is in a state of standing-by until there is an access request by non-contact communication to the non-contact communication section 101.
(S2002)
   The control section 102 judges whether or not it is detected, at the non-contact communication section 101, that there is an access request by non-contact communication. If there is no access request, the routine returns to step S2001, whereas if there is an access request, the routine proceeds to step S2003.
(S2003)
   The control section 102 judges whether or not the information which is the object of the non-contact communication is information which is an object for which on/off control of the non-contact communication function is to be carried out. If the information is an object of on/off control, the routine moves on to step S2004, whereas if the information is not an object of on/off control, the routine proceeds to step S2006.
(S2004)
   The control section 102 acquires the inclination of the non-contact communication electronic device 100 main body from the inclination detecting section 103.
(S2005)
   The control section 102 judges whether or not the inclination of the non-contact communication electronic device 100 main body acquired in step S2004 is a horizontal state or within a predetermined allowable range from a horizontal state. If the inclination is not within the predetermined range, the routine returns to step S2001, whereas if the inclination is within the predetermined range, the routine moves on to step S2006.
(S2006)
   The control section 102 turns the non-contact function of the non-contact communication section 101 on.
(S2007)
   The non-contact communication section 101 carries out non-contact communication with the non-contact communication section 111.
(S2008)
   After the non-contact communication ends, the control section 102 turns the non-contact function of the non-contact communication section 101 off.

In the present seventh exemplary embodiment, a structure is described which has the inclination detecting section 103 in the same way as in the first exemplary embodiment. However, even in cases of having structures which are similar to those of the second exemplary embodiment through the sixth exemplary embodiment, effects which are similar to those of the present seventh exemplary embodiment can be obtained in accordance with an operational flow similar to Fig. 20.

As described above, in accordance with the non-contact communication electronic device relating to the present seventh exemplary embodiment, the extent of on/off control of the non-contact communication function can be changed in accordance with the type of the information which is the object of the non-contact communication, and the user's desires for their own convenience of use can flexibly be dealt with.

## Claims

1. An access controlling method of a non-contact communication electronic device, comprising:
detecting an inclination of a main body; and
controlling an on/off state of a non-contact communication function of the main body,
wherein, in the controlling,
in a case in which it is detected that the main body is in a horizontal state or in a case in which it is detected that the main body is within a predetermined allowable range from a horizontal state in the inclination detecting,
the non-contact communication function is turned on.

2. An access controlling method of a non-contact communication electronic device which is provided with a storage section which stores sets of information relating to devices which are valid as communication partners of non-contact communication of a main body and position information of the valid devices, the method comprising:
detecting current position information of the main body; and
controlling an on/off state of a non-contact communication function of the main body,
wherein, in the controlling,
in a case in which it is judged, on the basis of the information detected in the position detecting and the information stored in the storage section, that a device which is valid as a communication partner of non-contact communication of the main body exists at a current position of the main body,
the non-contact communication function is turned on.

3. The access controlling method of a non-contact communication electronic device of claim 2, further comprising:
detecting an inclination of the main body,
wherein the storage section stores information relating to inclinations of communication sections of the devices which are valid as communication partners of non-contact communication of the main body, and
in the controlling, in a case in which
it is judged, on the basis of the information detected in the position detecting and the information stored in the storage section, that a device which is valid as a communication partner of non-contact communication of the main body exists at a current position of the main body,
and an inclination of a communication section of a device which is valid as a communication partner of non-contact communication of the main body at the current position of the main body is read-out from the storage section, and it is further judged that said inclination and the inclination detected by an inclination detecting section match one another,
the non-contact communication function of the main body is turned on.

4. An access controlling method of a non-contact communication electronic device, comprising:
detecting current position information of a main body;
acquiring, via a communication network connected to the main body, information relating to devices which are valid as communication partners of non-contact communication of the main body; and
controlling an on/off state of a non-contact communication function of the main body,
wherein, in the controlling,
in a case in which it is detected, on the basis of the information acquired in the position detecting and in the device information acquiring, that a device which is valid as a communication partner of non-contact communication of the main body exists at a current position of the main body,
the non-contact communication function is turned on.

5. The access controlling method of a non-contact communication electronic device of claim 4, further comprising:
detecting an inclination of the main body,
wherein, in the device information acquiring, the information relating to the valid devices and information relating to inclinations of communication sections of the devices are acquired via the communication network connected to the main body, and
in the controlling, in a case in which
it is judged, on the basis of the information acquired in the position detecting and in the device information acquiring, that a device which is valid as a communication partner of non-contact communication of the main body exists at a current position of the main body,
and it is further judged that an inclination acquired in the device information acquiring and the inclination detected in the inclination detecting match one another,
the non-contact communication function of the main body is turned on.

6. An access controlling method of a non-contact communication electronic device, comprising:
detecting movement of a main body; and
controlling an on/off state of a non-contact communication function of the main body,
wherein, in the controlling,
in a case in which movement of a predetermined extent or greater is detected in the movement detecting, and the movement is a predetermined direction,
the non-contact communication function of the main body is turned on.

7. The access controlling method of a non-contact communication electronic device of one of claims 1, 2, 4, or 6, wherein
information which is transmitted or received by the non-contact communication function includes information relating to a type of the information, and
in the controlling,
on the basis of the information relating to the type, it is judged whether or not the on/off state of the non-contact communication function is to be controlled.

8. A non-contact communication electronic device comprising:
a non-contact communication section that, in an on state, carries out non-contact communication with an exterior;
an inclination detecting section detecting an inclination of a main body; and
a control section controlling an on/off state of the non-contact communication section when the non-contact communication section receives a non-contact communication request,
wherein, in a case in which the inclination detecting section detects that the main body is in a horizontal state or in a case in which the inclination detecting section detects that the main body is within a predetermined allowable range from a horizontal state,
the control section turns the non-contact communication section on.

9. A non-contact communication electronic device comprising:
a non-contact communication section that, in an on state, carries out non-contact communication with an exterior;
a storage section storing sets of information relating to devices which are valid as communication partners of non-contact communication of a main body and position information of the valid devices;
a position detecting section detecting current position information of the main body; and
a control section controlling an on/off state of a non-contact communication function of the main body when the non-contact communication section receives a non-contact communication request,
wherein, in a case in which it is judged, on the basis of the information detected by the position detecting section and the information stored in the storage section, that a device which is valid as a communication partner of non-contact communication of the main body exists at a current position of the main body,
the control section turns the non-contact communication section on.

10. The non-contact communication electronic device of claim 9, further comprising:
an inclination detecting section detecting an inclination of the main body,
wherein the storage section stores information relating to inclinations of communication sections of the devices which are valid as communication partners of non-contact communication of the main body, and
in a case in which it is judged, on the basis of the information detected by the position detecting section and the information stored in the storage section, that a device which is valid as a communication partner of non-contact communication of the main body exists at a current position of the main body,
and an inclination of a communication section of a device which is valid as a communication partner of non-contact communication of the main body at the current position of the main body is read-out from the storage section, and it is further judged that said inclination and the inclination detected by the inclination detecting section match one another,
the control section turns the non-contact communication section of the main body on.

11. A non-contact communication electronic device comprising:
a non-contact communication section that, in an on state, carries out non-contact communication with an exterior;
a position detecting section detecting current position information of a main body;
a device information section acquiring, via a communication network connected to the main body, information relating to devices which are valid as communication partners of non-contact communication of the main body; and
a control section controlling an on/off state of a non-contact communication function of the main body when the non-contact communication section receives a non-contact communication request,
wherein, in a case in which it is detected, on the basis of the information acquired by the position detecting section and the device information acquiring section, that a device which is valid as a communication partner of non-contact communication of the main body exists at a current position of the main body,
the control section turns the non-contact communication function on.

12. The non-contact communication electronic device of claim 11, further comprising:
an inclination detecting section detecting an inclination of the main body,
wherein the device information acquiring section acquires, via the communication network connected to the main body, the information relating to the valid devices and information relating to inclinations of communication sections of the devices, and
in a case in which it is judged, on the basis of the information acquired at the position detecting section and the device information acquiring section, that a device which is valid as a communication partner of non-contact communication of the main body exists at a current position of the main body,
and it is further judged that an inclination acquired by the device information acquiring section and the inclination detected by the inclination detecting section match one another,
the control section turns the non-contact communication function of the main body on.

13. A non-contact communication electronic device comprising:
a movement detecting section detecting movement of a main body; and
a control section controlling an on/off state of a non-contact communication function of the main body when a non-contact communication section receives a non-contact communication request,
wherein, in a case in which the movement detecting section detects movement of a predetermined extent or greater, and the movement is a predetermined direction,
the control section turns the non-contact communication function of the main body on.

14. The non-contact communication electronic device of one of claims 8, 9, 11 or 13, wherein information which is transmitted or received by the non-contact communication section includes information relating to a type of the information, and
on the basis of the information relating to the type, the control section judges whether or not the on/off state of the non-contact communication section is to be controlled.
